Europäisches Patentamt

European Patent Office

Office européen des brevets

(11) Publication number: **0 294 226**
A2

# (12) EUROPEAN PATENT APPLICATION

(21) Application number: **88305097.3**

(51) Int. Cl.⁴: **C 12 C 5/00**

(22) Date of filing: **03.06.88**

(30) Priority: **05.06.87 GB 8713168**

(43) Date of publication of application:
**07.12.88 Bulletin 88/49**

(84) Designated Contracting States:
**AT BE CH DE ES FR GB GR IT LI LU NL SE**

(71) Applicant: **DALGETY U.K. LIMITED**
**19 Hanover Square**
**London W1R 9DA (GB)**

(72) Inventor: **Crawshaw, Anne**
**3 Old St. Pauls Russell Street**
**Cambridge CB2 1HA (GB)**

**Frazier, Peter John Walnut House**
**17 Scotts Crescent Hilton**
**Huntingdon Cambridgeshire PE18 9PG (GB)**

(74) Representative: **Holdcroft, James Gerald, Dr. et al**
**Graham Watt & Co. Riverhead**
**Sevenoaks Kent TN13 2BN (GB)**

(54) **Improvements in or relating to the production of mashing adjuncts.**

(57) A process of extruding moist whole cereal grain employs a twin-screw extruder including an upstream helical feed screw region (30), a downstream helical lead discharge screw region (32), two intermediate lead screw regions (32) and three paddle regions (34) alternating with the feed and lead screw regions. The upstream paddle region (34) comprises a plurality of pairs of symmetrical bilobal paddles set in a relative angular orientation to provide them with a substantially zero forwarding ability of material through the extruder: the next and intermediate downstream paddle region (34) comprises a plurality of pairs of symmetrical bilobal paddles set in a relative angular orientation to provide them with a zero or negative forwarding ability of material through the extruder; and the next and last downstream paddle region (34) comprises a plurality of pairs of bilobal paddles set in a relative angular orientation to provide them with a negative forwarding ability of material through the extruder. The negative forwarding ability of the pairs of paddles of the last paddle region (34) is not exceeded by that of the paddles of the intermediate paddle region.

Fig.2.

EP 0 294 226 A2

Bundesdruckerei Berlin

## Description

## IMPROVEMENTS IN OR RELATING TO THE PRODUCTION OF MASHING ADJUNCTS

In, for example, the manufacture of beer, barley is malted and the malted barley mashed with water to form a wort which is then fermented. Cereal adjuncts (non-malted) may be added to the mash to provide a source of carbohydrate additional to the malted barley and available to the mash tun enzymes without the need for a time and energy-consuming conversion by the traditional malting process.

In the production of potable spirits, a wort is similarly prepared and fermented prior to distillation; and again cereal adjuncts may be added to the mash.

In order to make the carbohydrate of whole grain available in these adjuncts it is necessary for example to modify the grain endosperm structure and this can be done by cooking the grain.

The structure of whole grain can be modified by extruding it under cooking conditions, and it is an object of the present invention to provide an improved process of extruding whole grain to produce a mashing adjunct which may be used in brewing or in the production of potable spirits.

A known twin-screw extruder, both screws of which rotate anti-clockwise when viewed from the discharge end of the extruder, has a linear configuration comprising an upstream helical feed screw region, a plurality of downstream helical lead screw regions including a helical lead discharge screw region for discharging through a die at the downstream end of the extruder, all for conveying material downstream in the extruder and a plurality of paddle regions also downstream of the feed region comprising pairs of symmetrical bilobal paddles, the paddles of each pair of which are carried on respective screws of the extruder and are orientated at 90° with respect to one another, to mix and work the conveyed material to generate interparticulate friction within the conveyed material to cause cooking of the material and distribution of its ingredients.

It is possible readily to vary the linear configuration of this known twin-screw extruder by varying the linear position of the lead screw and paddle regions and the composition and material forwarding ability of the paddle regions. Thus, the relative angular orientation of adjacent bilobal paddles on each screw of the extruder is selectable to determine the degree to which the paddles will "forward", i.e. convey material downstream in the extruder or negatively forward, i.e. oppose its downstream conveyance.

We have found that a synergistically effective production of mashing adjuncts can be obtained by particular linear configurations of such an extruder.

Thus, the present invention provides a process of extruding moist whole cereal grain under cooking conditions using a twin-screw extruder including an upstream helical feed screw region, a downstream helical lead discharge screw region, two intermediate lead screw regions and three paddle regions alternating with the feed and lead screw regions, the upstream paddle region comprising a plurality of pairs of symmetrical bilobal paddles set in a relative angular orientation to provide them with a substantially zero forwarding ability of material through the extruder, the next and intermediate downstream paddle region comprising a plurality of pairs of symmetrical bilobal paddles set in a relative angular orientation to provide them with a zero or negative forwarding ability of material through the extruder and the next and last downstream paddle region comprising a plurality of pairs of bilobal paddles set in a relative angular orientation to provide them with a negative forwarding ability of material through the extruder, the negative forwarding ability of the pairs of paddles of the last paddle region not being exceeded by that of the paddles of the intermediate paddle region. The twin-screws of the extruder are driven for example at a speed of 250 - 500 r.p.m. e.g. 350 - 450 r.p.m.

The invention also comprehends the product of a process according to the invention and a twin-screw extruder constructed and arranged to carry out a process according to the invention.

By using the twin-screw extruder having the specified linear configuration, it has been found that whole grain may be cracked, sheared and ground into a coarse powder with few fines and at the same time compressed and heated to form a semi-plastic mass in the die of the extruder which can subsequently be cut into pellets, on exiting the extruder die, to form a satisfactory cereal adjunct, with or without re-grinding.

Typically, the process includes heating the barrel in zones to predetermined elevated temperatures and for example to temperatures which rise in the downstream direction of flow of material through the extruder to a temperature of, e.g. 90°C - 160°C.

Typically also, the upstream paddle region may comprise eight pairs of symmetrical bilobal paddles set with adjacent paddles on each screw in 90° relative orientation with respect to one another, the next and intermediate paddle region may comprise four to six pairs of symmetrical bilobal paddles set with adjacent paddles on each screw in a range of 60° reversing relative orientation to 90° relative orientation with respect to one another and the next and last paddle region may comprise four to six pairs of symmetrical bilobal paddles set with adjacent paddles on each screw in a range of 30° to 60° reversing relative orientation with respect to one another.

By a "reversing" relative orientation is meant an angular offset of each paddle with respect to its next adjacent upstream paddle on the same screw which is less than 90° in the direction of rotation of the screw.

Within the range of extruder configurations defined for use in the present invention, results depend upon the cereal or mixture of cereals selected to form the adjunct. However, using wheat, for example, it is preferred to adopt a configuration giving rise to a low extruder work input within the defined range. It has been found that such extruder configurations of low work input tend to give products of lower specific volume than at higher work inputs within the defined range and in the case of wheat to provide for particularly quick run-off times using the wheat extrudate as an adjunct in the manufacture of beer with up to 30% replacement level by the adjunct.

In potable spirit production higher adjunct levels may be used, even up to 90% replacement.

There may be incorporated in the extrudate an enzyme material adapted to break down non-starch materials e.g. other carbohydrates or proteins so that such non-starch materials do not interfere with run-off or wort viscosity. The enzyme material may comprise any of β- glucanase, pentosanase and protease, and may be incorporated by spraying onto the cooled extrudate.

There now follows a detailed description, to be read with reference to the accompanying drawings, of processes embodying the present invention. This description is given by way of example of the present invention only and not by way of limitation thereof. In the drawings:

FIG. 1 is a diagrammatic perspective and partly exploded view of the twin-screw extruder used in the processes embodying the present invention;

FIG. 2 shows a side view of the twin extruder screws together with parts of a die head;

FIGS. 3a and 3b show one pair of bilobal paddles of the extruder in different positions of rotation;

FIGS. 4a to 4d illustrate relative paddle orientations of adjacent paddles on each screw; and

FIGS. 5a to 5f are diagrammatic illustrations of various linear screw configurations of the twin extruder which may be used in an extruding process of the present invention.

With reference now to the accompanying drawings, the Baker Perkins MPF type twin-screw extruder used comprises a barrel 10 having twin cylindrical intersecting bores 12 intersecting one another at a mid vertical plane. Twin-screws 14 (see Fig. 2) are mounted, one in each bore 12, and are driven in co-rotation, in the same direction at a variable speed to extrude material through a die head 16 whereafter the extrudate is cut up into pieces by a rotatary cutter (not shown).

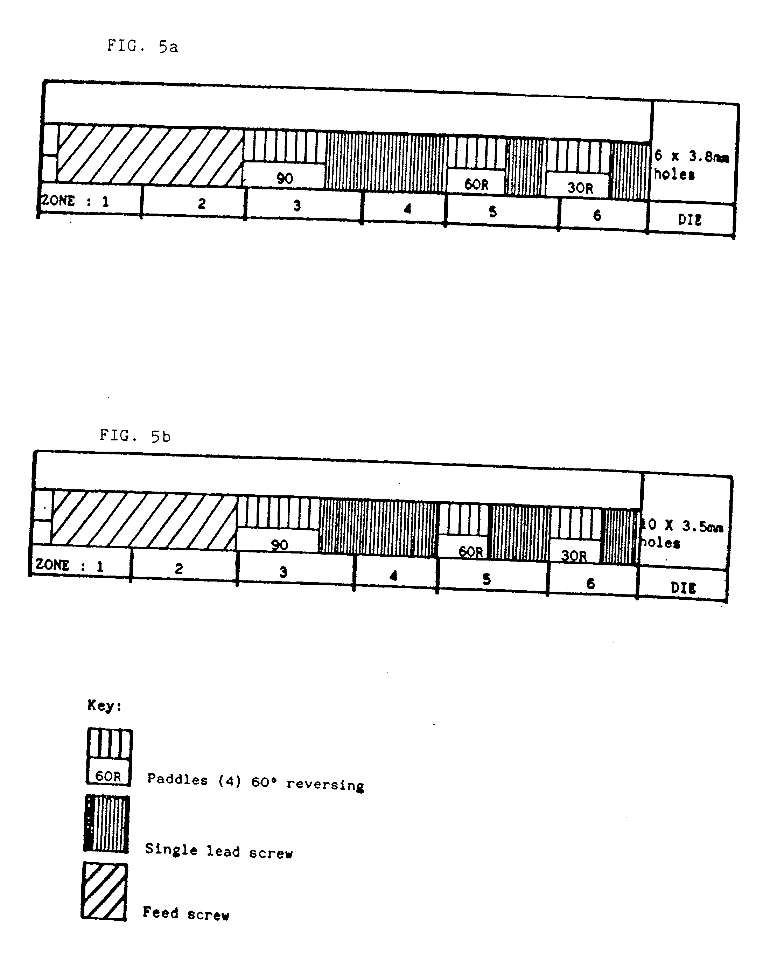

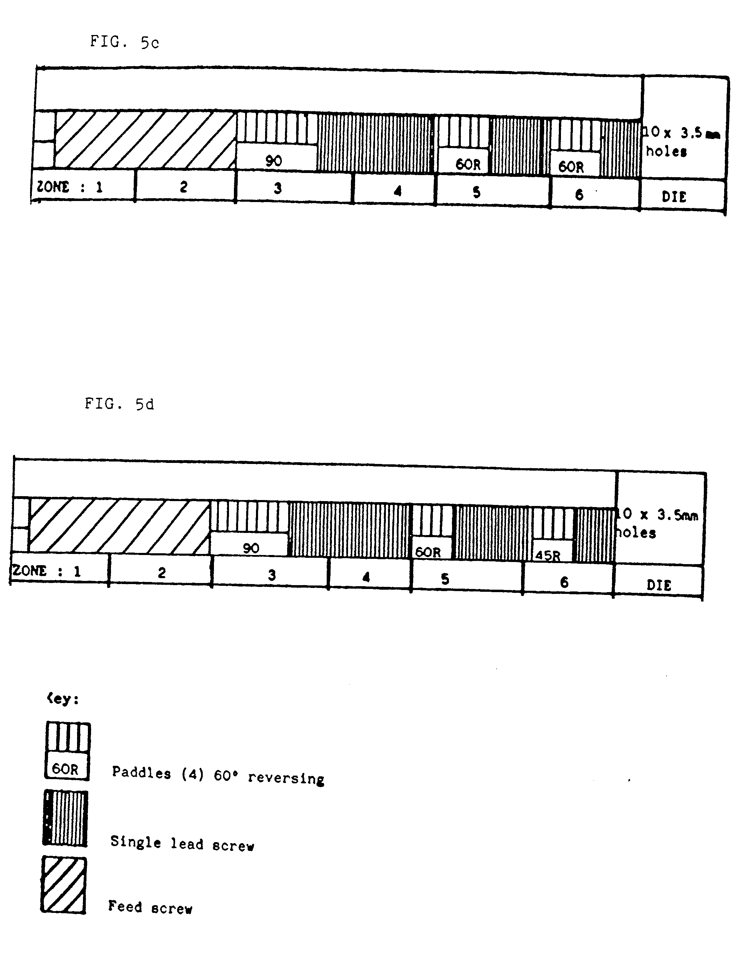

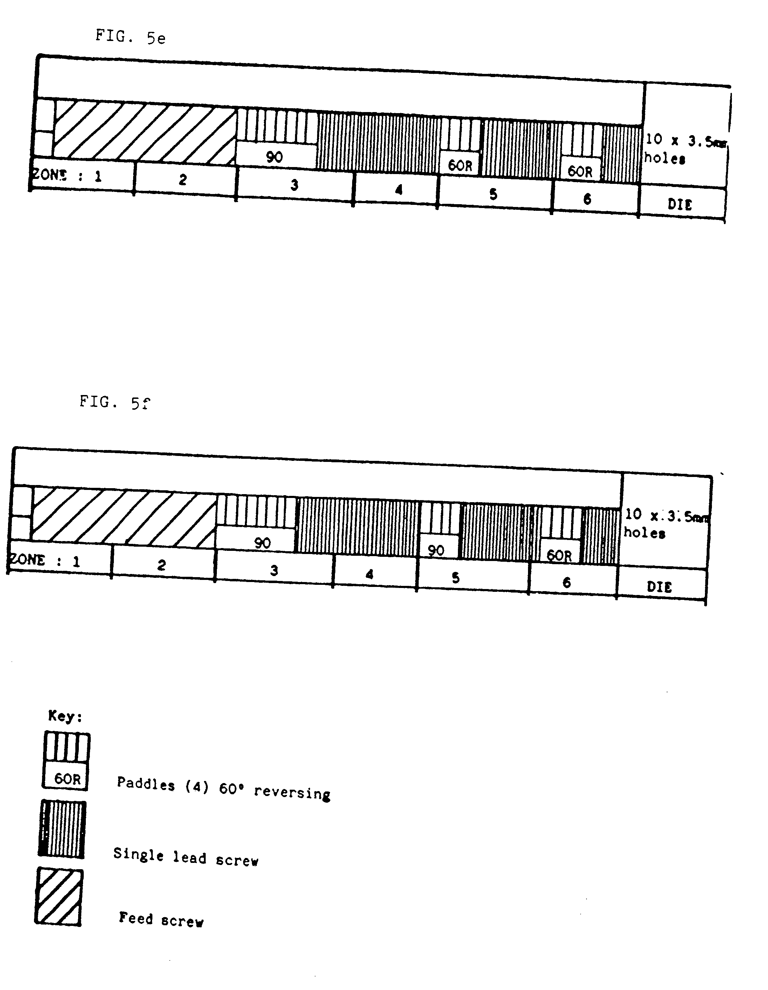

Various samples were extruded in this extruder using selected whole grain or mixtures of selected whole grain metered from a hopper 20 into the upstream main feed port 22 of the extruder and extruded through the die head 16 in a single stage. Water in controlled amounts may be added through the liquid injection port 24. The moisture content of the whole grain as fed to the extruder is for example 12-20% by weight and it will be realized that, depending on the moisture content of the grain as received on site, it may not always be necessary to add water through the port 24; and in cases where the grain as received is particularly moist, it may even be necessary to dry the grain to an acceptable moisture content before feeding it into the hopper 20. The barrel 10 was electrically heated, balanced by water cooling, in five zones each independently microprocesser controlled, with the remaining upstream zone below the hopper 20, continuously cooled. With reference to Figures 5a-5f the set temperatures used were for example about 30°C in zone 2 increasing progressively through zones 3 and 4, up to 90°C-160°C in zones 5 and 6, zone 1 being the cooled zone below the hopper; the temperature in zones 5 and 6 is usually the same.

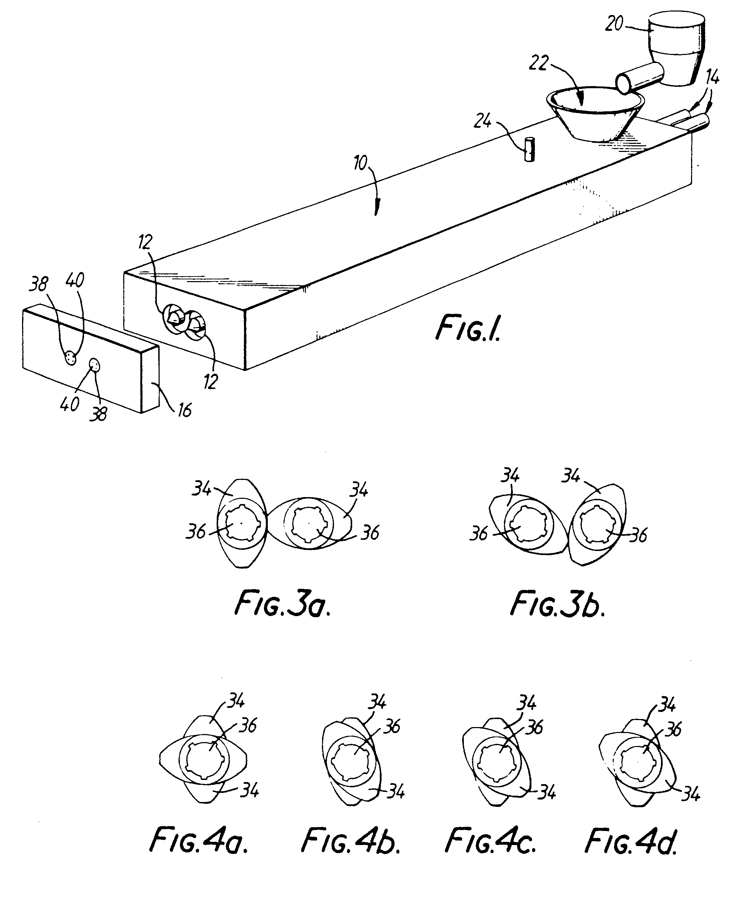

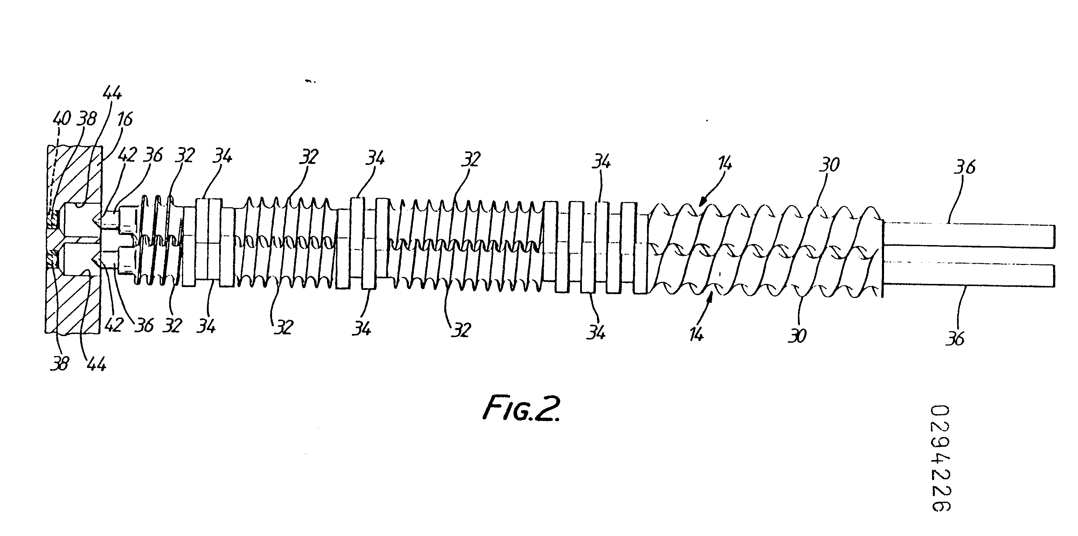

The screws 14 were correspondingly composed of helical feed screws 30, helical lead screws 32 and sets of bilobal paddles 34 mounted on each screw shaft 36 and positioned as follows. At the upstream end, each screw comprised a helical feed screw 30 having two flights starting at 180° from one another, the lead length (pitch) of which was equal to one bore 12 diameter. This was followed by three alternate bilobal paddle sets and single helical lead screws 32, the downstream lead screws immediately upstream of the die head 16 being single helical lead discharge screws having a wide flight each to act as a journal in the corresponding bore 12 of the barrel. The lead length of the lead screws 32 was equal to one quarter of the bore 12 diameter. The total length of each screw 14 was fifteen times the bore 12 diameter. The bilobal paddles 34 were set in 90° orientated pairs, one on each shaft 36 as shown in Figs. 3a and 3b in which the paddles are viewed from the discharge end of the extruder and, as then seen, rotate both in the anti-clockwise direction.

The number of paddles 34 in the first i.e. upstream set of paddles on each shaft 36 was eight and these paddles were set with adjacent paddles on each shaft in 90° relative orientation with respect to one another as shown in Fig. 4a, Figs. 4a to 4d being views of adjacent paddles 34 on a shaft 36 as seen from the discharge end of the extruder.

The first upstream paddle 34 of the upstream set of paddles on each shaft 36 was aligned with the downstream end of one of the lobes of the feed screw 30 on the shaft. The number of paddles 34 in the next and intermediate set of paddles 34 on each shaft 36 was selected to be either six, five or four paddles 34, the paddles being set at 60° reversing relative orientation as shown in Fig. 4d or 90° relative orientation as shown in Fig. 4a, the first paddle 34 of the intermediate set of paddles 34 on each shaft 36 being aligned with the downstream end of the lobe of the upstream lead screw 32.

The number of paddles 34 in the next and last set of paddles 34 on each shaft 36 was selected to be either six, five or four paddles 34, the paddles being set at 30° reversing relative orientation as shown in Fig. 4b or 60° reversing relative orientation as shown in Fig. 4d or 45° reversing relative orientation as shown in Fig. 4c.

The die head 16 was fitted with two die inserts 38 each having a plurality of holes 40 3-5 mm in diameter having a land length of 3-19 mm.

Conical end portions 42 of the shafts 36 extend into bores 44 of the die head 16 which provide free spaces between the end portions of the twin-screws and the die inserts 38, which are themselves fitted into reduced portions of the bores 44.

Table 1 taken with Fig. 5a to Fig. 5f records the extrusion parameters and mashing trial results on sample runs using extruder configurations as detailed in the Figures which are generally to linear scale and in which the references 60R, 45R and 30R refer to 60°, 45° and 30° reversing relative orientations of the paddles 34 and the reference 90 refers to a 90° relative orientation of the paddles 34. The extruder used here was an MPF 50D.

Table 1  Extrusion Parameters and Mashing Trial Results

| SAMPLE CONFIGURATION | EXTRUDER WORK INPUT | TOTAL EXTRUSION MOISTURE (%) | SCREW SPEED (rpm) | PELLET MOISTURE (%) | PELLET SPECIFIC VOLUME ($mlg^{-1}$) | MASHING – WHOLE PELLET EXTRACT ($l^\circ kg^{-1}$) / RATE (mins) / VISCOSITY (cp) 10% | 20% | 30% | MASHING – GROUND PELLET EXTRACT ($l^\circ kg^{-1}$) / RATE (mins) / VISCOSITY (cp) 10% | 20% | 30% |
|---|---|---|---|---|---|---|---|---|---|---|---|
| Control 100% malt (1) | | | | 4.4 | | | | | 286(299) 5 1.54 | | |
| Control 100% malt (2) | | | | 4.9 | | | | | 286(301) 5 1.54 | | |
| Rye Fig.5b | High | 18.0 | 400 | 11.7 | 2.53 | 284(299) 22 1.83 | 278(295) 65 2.08 | 273(292) 71 3.13 | 284(299) 17 1.78 | 280(297) 45 2.07 | 279(297) 80 2.30 |
| Rye Fig.5f | Low | 13.0 | 375 | 9.4 | 2.33 | 285(298) 19 1.92 | 280(296) 20 2.04 | 276(289) 27 2.49 | 287(302) 11 1.83 | 284(300) 15 2.15 | 281(297) 22 2.56 |
| Barley Fig.5a | High | 13.5 | 450 | 8.6 | 4.91 | 285(299) 12 1.71 | 283(299) 27 2.17 | 278(295) 67 2.58 | 284(298) 14 1.78 | 282(298) 36 2.12 | 279(296) – 2.58 |
| Barley (Tippa) Fig.5b | High | 17.0 | 350 | 10.6 | – | 284(299) 8 1.72 | 280(297) 15 2.04 | 275(293) 38 2.33 | 284(299) 5 1.79 | 281(298) 12 2.00 | 276(294) 25 2.49 |
| Triticale (Lasko) Fig.5b | High | 18.0 | 350 | 10.5 | 4.36 | 284(299) 11 1.58 | 282(299) 15 1.60 | 282(301) 23 1.64 | 285(300) 12 1.56 | 284(301) 18 1.62 | 282(301) 19 1.68 |
| Triticale (Lasko) Fig.5e | Low | 17.0 | 375 | 11.3 | 2.20 | 283(298) 9 1.56 | 282(299) 13 1.58 | 278(297) 17 1.63 | 285(300) 7 1.56 | 285(303) 20 1.59 | 282(302) 18 1.62 |

0 294 226

Table 1  Extrusion Parameters and Mashing Trial Results ( Continued)

| SAMPLE CONFIGURATION | EXTRUDER WORK INPUT | TOTAL EXTRUSION MOISTURE (%) | SCREW SPEED (rpm) | PELLET MOISTURE (%) | PELLET SPECIFIC VOLUME $(mlg^{-1})$ | MASHING – WHOLE PELLET EXTRACT $(l°kg^{-1})$ RATE (mins) VISCOSITY (cp) 10% | 20% | 30% | MASHING – GROUND PELLET EXTRACT $(l°kg^{-1})$ RATE (mins) VISCOSITY (cp) 10% | 20% | 30% |
|---|---|---|---|---|---|---|---|---|---|---|---|
| Triticale (Lasko)     Fig. 5f | Low | 16.5 | 375 | 10.7 | 2.71 | 284(299) 9 1.55 | 282(299) 14 1.66 | 279(298) 15 1.67 | 287(302) 7 1.58 | 285(302) 9 1.62 | 284(303) 15 1.66 |
| Triticale (Lasko)     Fig. 5f | Low | 18.0 | 375 | – | 2.13 | 283 6 1.57 | 279 10 1.63 | 274 10 1.70 | 285 6 1.58 | 283 8 1.63 | 281 10 1.67 |
| Wheat (Brigand)     Fig. 5b | High | 18.0 | 375 | 12.3 | 3.19 | 284(300) 13 1.55 | 279(297) 18 1.57 | 275(295) 26 1.61 | 285(301) 10 1.56 | 282(300) 18 1.59 | 279(299) 22 1.61 |
| Wheat (Brigand)     Fig. 5e | Low | 14.5 | 375 | 11.9 | 1.50 | 284(299) 9 1.53 | 278(295) 16 1.54 | 273(292) 15 1.57 | 284(299) 7 1.52 | 283(301) 9 1.54 | 281(301) 14 1.58 |
| Wheat (Brigand)     Fig. 5f | Low | 16.0 | 375 | 13.1 | 1.42 | 279(295) 5 1.53 | 273(291) 8 1.53 | 265(285) 9 1.57 | 284(300) 5 1.56 | 280(298) 6 1.57 | 276(297) 8 1.59 |
| Wheat (Avalon)     Fig. 5d | Medium | 18.0 | 375 | 12.7 | 1.88 | 283(299) 11 1.52 | 280(298) 13 1.55 | 274(294) 19 1.57 | 286(302) 9 1.53 | 284(302) 13 1.54 | 282(303) 21 1.59 |
| Wheat (Avalon)     Fig. 5d | Medium | 17.0 | 375 | 11.4 | 2.14 | 286(301) 7 1.56 | 283(300) 11 1.55 | 278(297) 15 1.63 | 285(300) 5 1.55 | 285(303) 11 1.58 | 283(303) 15 1.63 |
| Wheat (Avalon) + 1 ml enzyme soln     Fig. 5d | Medium | 17.0 | 375 | 11.5 | 2.14 | 284(299) 9 1.43 | 281(298) 9 1.44 | 278(297) 12 1.45 | 285(300) 6 1.43 | 283(301) 10 1.44 | 281(301) 13 1.45 |

# Table 1  Extrusion Parameters and Mashing Trial Results (Continued)

| SAMPLE CONFIGURATION | EXTRUDER WORK INPUT | TOTAL EXTRUSION MOISTURE (%) | SCREW SPEED (rpm) | PELLET MOISTURE (%) | PELLET SPECIFIC VOLUME (mlg$^{-1}$) | MASHING – WHOLE PELLET EXTRACT (l°kg$^{-1}$) RATE (mins) VISCOSITY (cp) 10% | 20% | 30% | MASHING – GROUND PELLET EXTRACT (l°kg$^{-1}$) RATE (mins) VISCOSITY (cp) 10% | 20% | 30% |
|---|---|---|---|---|---|---|---|---|---|---|---|
| Wheat (Avalon) + 5 ml enzyme soln    Fig. 5d | Medium | 17.0 | 375 | 11.5 | 2.14 | 286(301) 7 1.38 | 283(301) 10 1.39 | 280(300) 12 1.40 | 285(300) 5 1.38 | 285(303) 6 1.39 | 284(304) 10 1.40 |
| Wheat (Avalon)    Fig. 5e | Low | 18.0 | 375 | 12.7 | 1.60 | 282(298) 8 1.52 | 278(296) 10 1.55 | 272(292) 12 1.56 | 285(301) 5 1.56 | 283(301) 7 1.61 | 280(301) 14 1.62 |
| Wheat (Avalon)    Fig. 5e | Low | 17.0 | 375 | 12.0 | 1.65 | 282(297) 9 1.55 | 277(294) 12 1.57 | 271(290) 12 1.58 | 286(302) 9 1.54 | 282(300) 13 1.55 | 280(300) 16 1.58 |
| Wheat (Avalon)    Fig. 5f | Low | 18.0 | 350 | 13.5 | 1.26 | 277(293) 4 1.53 | 268(286) 9 1.57 | 262(282) 12 1.57 | 282(298) 6 1.59 | 280(299) 10 1.59 | 279(300) 10 1.63 |
| Wheat (Avalon)    Fig. 5f | Low | 17.0 | 400 | 12.4 | 1.26 | 281(296) 6 1.52 | 274(292) 7 1.54 | 270(290) 9 1.57 | 284(300) 6 1.56 | 283(301) 8 1.56 | 281(302) 11 1.59 |
| Wheat + Barley 1:1, (Avalon + Tippa)    Fig. 5c | Medium | 18.0 | 375 | 12.2 | 2.07 | 284(300) 11 1.63 | 279(297) 21 1.72 | 276(296) 49 1.87 | 285(301) 8 1.64 | 283(301) 14 1.76 | 278(298) 34 1.91 |
| Wheat + Barley 1:1, (Avalon + Tippa)    Fig. 5c | Medium | 16.0 | 375 | 10.5 | 2.58 | 284(299) 12 1.63 | 281(298) 24 1.75 | 278(297) 42 1.91 | 284(299) 9 1.63 | 283(300) 23 1.79 | 280(299) 35 1.92 |
| Wheat + Barley 1:1, (Avalon + Tippa) + 1ml enzyme soln Fig.5c | Medium | 16.0 | 375 | 10.6 | 2.58 | 285(300) 6 1.46 | 282(299) 10 1.45 | 279(298) 16 1.48 | 284(299) 6 1.44 | 283(300) 8 1.46 | 279(298) 14 1.48 |

Table 1  Extrusion Parameters and Mashing Trial Results ( Continued)

| SAMPLE CONFIGURATION | EXTRUDER WORK INPUT | TOTAL EXTRUSION MOISTURE (%) | SCREW SPEED (rpm) | PELLET MOISTURE (%) | PELLET SPECIFIC VOLUME (mlg$^{-1}$) | MASHING — WHOLE PELLET EXTRACT (l°kg$^{-1}$) RATE (mins) VISCOSITY (cp) | | | MASHING — GROUND PELLET EXTRACT (l°kg$^{-1}$) RATE (mins) VISCOSITY (cp) | | |
|---|---|---|---|---|---|---|---|---|---|---|---|
| | | | | | | 10% | 20% | 30% | 10% | 20% | 30% |
| Wheat + Barley 1:1, (Avalon + Tippa) Fig.5c + 5 ml enzyme soln | Medium | 16.0 | 375 | 10.6 | 2.58 | 285(300) 7 1.39 | 282(299) 9 1.40 | 279(298) 13 1.43 | 285(300) 5 1.39 | 283(300) 8 1.40 | 281(300) 12 1.40 |
| Control 100% malt (2) | | | | 4.9 | | | | | + 1 ml soln A 284(297) 4 1.43 | | |
| Control 100% malt (2) | | | | 4.9 | | | | | + 5 ml soln A 287(302) 3 1.40 | | |

With reference to Table 1, EXTRUDER WORK INPUT is the measure of the "severity" of the various extruder configurations in terms of the number of paddles 34 and the relative angular settings of adjacent paddles 34 on each screw. This is in descending order of the Figs. 5a to Fig. 5f, Fig. 5a representing the most severe extruder configuration and Fig. 5f the least severe extruder configuration.

Standard IOB laboratory mashing tests were performed using extrudate, either as whole pellets or after grinding, as a replacement for malt at either 10%, 20% or 30% to obtain the results shown in the table.

The viscosity of the mash was recorded at 20°C in an Ostwald capillary viscometer. The time taken for a given volume to filter and the carbohydrate extract of the filtrate were also measured. In the table the extract has been expressed on an "as is" basis, and dry solids basis (dsb) in parentheses.

Product temperature measured in zone 6 tended to be up to 30°C higher than the barrel set temperature, being influenced by feed moisture and number of paddles 34. Slightly higher temperatures (an indication of the energy input) were recorded for lower moistures and larger numbers of paddles. A deadstop shutdown on Fig. 5c and Fig. 5f showed this zone to still contain granular material with plasticisation not occurring until the very last turn of the screws upon opening the barrel 10.

Die product temperature varied from approximately 130°-170°C being influenced by feed moisture as above.

Mainly die pressures were extremely high, particularly for the low and medium work input configurations where pressure varied between 1300 and 1700 psi. A generalised look at die pressure for all samples under all configurations tended to indicate that "lower" pressures, that is less than 800 psi, occurred under high work input configuration and resulted in greater homogeneity of extrudate. Only for a given configuration and raw material were high die pressures and high specific volumes related. Comparison of the two rye extrudates, from a high and lower input configuration, having similar specific volumes but widely differing die pressures (460 and 1700 psi respectively) showed large pieces of endosperm visible in the low work input configuration which were not apparent in the high work input configuration indicating more particle size reduction by the extra paddles and thus more complete plasticisation.

Rye was extruded at the least severe and the most severe conditions. The samples had however similar specific volumes of around 2.5 mlg$^{-1}$. Larger pieces of endosperm were quite noticeable in the low work input setting of the extruder. Both had considerably longer filtration rates than any of the other samples particularly under the most severe extrusion conditions, (22-71 mins) and formed viscous mashes (1.83-3.13 cp). Carbohydrate extracts were reduced by increasing replacement levels of whole adjunct, and were little improved when the adjunct was ground.

In respect of barley, the only samples were extruded under high work input configurations. The most severe configuration, extruded at a lower moisture and higher screw speed, had a high specific volume of 4.91 mlg$^{-1}$ giving long filtration rates (12-67 mins) and viscous mashes (1.71-2.58 cp). Under the slightly less severe conditions the filtration rates were shorter (8-38 mins) although still far in excess of control malt (4-5 mins) and viscosity of the mash was still higher. Carbohydrate extract was reduced as the level of adjunct was increased. Grinding did not improve the extract.

When extruded under high work input configuration triticale has a very high specific volume (4.36 mlg$^{-1}$) and long filtration times (11-23 mins). Under the least severe extrusion configuration, but at the same extrusion moisture, specific volume was less (2.13) and filtration rates shorter (6-10 mins). Reducing the extrusion moisture from 18% to 16.5% increased specific volume to 2.71 and lengthened filtration times again to 9-15 mins. Carbohydrate extract was equivalent to the all malt control at all replacement levels in samples where the specific volume was greater than 2.71. Ground adjunct appeared to give higher values than the control.

Using Wheat (cv. Brigand) with decreasing work input from the extruder configurations, specific volume and filtration rate were both reduced from 3.19 mlg$^{-1}$ and 13-26 mins for the high extruder work input sample to 1.42 mlg$^{-1}$ and 5-8 mins for the low extruder work input sample. Mash viscosity did not appear to change at the 10% and 20% replacement levels and remained similar to the control malt mash except at 30% replacement when the increase in viscosity was high.

Wheat (cv. Avalon) when extruded under the least severe extruder configurations generally gave low filtration rates. Two samples in particular at 10% replacement in the mash had run off times equivalent to an all malt mash. These samples also had very low specific volumes (1.26 mlg$^{-1}$). As the extruder configuration was altered to put more work into the product, specific volume of this wheat extrudate was increased and so were filtration rates, generally speaking. Mash viscosity differed little from the control mash and appeared to be independent of extrusion conditions except under the most severe conditions at 30% replacement. *NOTE: cv. = cultivar

When 1 ml of β-glucanase enzyme solution (1 ml ABMC 150T diluted to 100 mls) was added to the mash, the viscosity dropped by approximately 0.12 cp at the 10 and 20% replacement levels, in the control mash and by 0.18 cp at the 30% level. Adding 5 mls enzyme solution reduced the mash viscosity, including that of the control, further still, having a more marked effect on the 30% replacement level mash than the two lower levels. However, the lowered viscosity did not seem to improve the carbohydrate extraction nor shorten the filtration time. Use of ground adjunct generally gave excellent extracts.

Turning to the mixed whole grain samples, wheat and barley 1:1 (cv. Avalon and cv. Tippa) were extruded on an intermediate work configuration - less work than barley alone but more work than wheat on its own. The resultant products were of medium specific volume(2.07-2.58 mlg$^{-1}$) but gave viscous mashes and long extraction times.

Adding enzyme solution considerably lowered the mash viscosity, e.g. the sample at the 30% replacement level viscosity was reduced from 1.91 cp to 1.48 cp and further reduced to 1.43 with the addition of 5 mls of enzyme solution. This also had the effect of shortening the run off times from 12-42 mins to 7-13 mins.

The conclusion drawn from the mashing trials was that under the range of extruder configuration, each of the cereals had slightly different behaviour. For the same configuration, rye and triticale tended to expand more (have higher specific volumes) than wheat and barley indicating a greater degree of plasticisation and "cook" in the extruder barrel. The lower the extrusion moisture, for a given configuration, then the greater the specific volume. Generally, there appeared to be a relationship between high specific volumes and long run off times.

Extruder configurations of lower work input tended to give products of lower specific volume, particularly wheat, and quick run off times.

Mash viscosity was more related to the type of cereal rather than the extruder configuration. Rye and barley always gave viscous mashes being particularly noticeable at the 30% replacement level, and resulted in very slow run-off times. Triticale gave mash viscosities close to that of an all malt mash only at the 10% level. Further increases in replacement level increased the viscosity beyond viable level, accentuated with higher work input from the extruder configurations. Wheat, whether Brigand or Avalon, did not increase the mash viscosity at all replacement levels, except where a high work inplut configuration was used.

Use of β-glucanase in the mash considerably reduced the mash viscosity resulting in quicker filtering rates although still not as rapid as the all malt mash even when the viscosity was reduced to the same level.

Carbohydrate extraction was similar to the control in all samples at the 10% replacement level except the wheat samples of very low specific volume where reduced extract was probably due to poor disintegration in the mash. More typical extract figures were obtained with ground pellet in these cases, being slightly higher than the control in the case of wheat and triticale and slightly lower than the control for barley.

## Claims

1. A process of extruding moist whole cereal grain using a twin-screw extruder including an upstream helical feed screw region, a downstream helical lead discharge screw region, two intermediate lead screw regions and three paddle regions alternating with the feed and lead screw regions, the upstream paddle region comprising a plurality of pairs of symmetrical bilobal paddles set in a relative angular orientation to provide them with a substantially zero forwarding ability of material through the extruder, the next and intermediate downstream paddle region comprising a plurality of pairs of symmetrical bilobal paddles set in a relative angular orientation to provide them with a zero or negative forwarding ability of material through the extruder and the next and last downstream paddle region comprising a plurality of pairs of bilobal paddles set in a relative angular orientation to provide them with a negative forwarding ability of material through the extruder, the negative forwarding ability of the pairs of paddles of the last paddle region not being exceeded by that of the paddles of the intermediate paddle region.

2. A process according to claim 1, including heating the barrel in zones to predetermined elevated temperatures which rise in the downstream direction of flow of material through the extruder to a temperature of 90°-160°C.

3. A process according to claim 1 or claim 2, including discharging the material through a die head of the extruder having a plurality of holes 3-5 mm in diameter having a land length of 3-19 mm.

4. A process according to any one of claims 1, 2 and 3 including driving the twin-screws of the extruder at a speed of 250 - 500 r.p.m. e.g. 350-450 r.p.m.

5. A process according to any one of the preceding claims, wherein the moisture content of the whole cereal grain as fed to the extruder is 12-20% by weight.

6. A process according to any one of the preceding claims, wherein the upstream paddle region comprises eight pairs of symmetrical bilobal paddles set with adjacent paddles on each screw in 90° relative orientation with respect to one another, the next and intermediate paddle region comprises four to six pairs of symmetrical bilobal paddles set with adjacent paddles on each screw in a range of 60° reversing relative orientation to 90° relative orientation with respect to one another and the next and last paddle region comprises four to six pairs of symmetrical bilobal paddles set with adjacent paddles on each screw in a range of 30° to 60° reversing relative orientation with respect to one another.

7. A process according to claim 6, wherein the next and intermediate paddle region comprises four pairs of symmetrical bilobal paddles set with adjacent paddles on each screw in 90° relative orientation with respect to one another and the next and last paddle region comprises four pairs of symmetrical bilobal paddles set with adjacent paddles on each screw in 60° reversing relative orientation with respect to one another.

8. A process according to claim 6, wherein the next intermediate and last paddle regions each comprise four pairs of symmetrical bilobal paddles set with adjacent paddles on each screw in 60° reversing relative orientation with respect to one another.

9. A beer brewing process using a mash-tun adjunct in replacement for up to 30% of the malt, the adjunct consisting of an extrudate produced using a process according to any one of the preceding claims.

10. A process for the production of potable spirits using a mashing adjunct in replacement for up to 90% of the malt, the adjunct consisting of an extrudate produced using a process according to any one of claims 1 to 8.

11. A process according to any one of the preceding claims, wherein there is incorporated in the extrudate an enzyme material adapted to break down non- starch materials e.g. other carbohydrates or proteins.

12. A process according to claim 11, wherein the enzyme material comprises any of β-glucanase, pentosanase and protease.

13. The product of a process according to any one of the preceding claims.

14. A twin-screw extruder constructed and arranged to carry out a process according to claim 1.

0294226

Fig.1.

Fig.3a.

Fig.3b.

Fig.4a.

Fig.4b.

Fig.4c.

Fig.4d.

FIG.2.

0294226

FIG. 5a

| ZONE : 1 | 2 | 3 | 4 | 5 | 6 | DIE |

90          60R          30R          6 x 3.8mm holes

FIG. 5b

| ZONE : 1 | 2 | 3 | 4 | 5 | 6 | DIE |

90          60R          30R          10 X 3.5mm holes

Key:

| 60R | Paddles (4) 60° reversing

Single lead screw

Feed screw

0294226

FIG. 5c

| ZONE : 1 | 2 | 3 | 4 | 5 | 6 | DIE |

FIG. 5d

| ZONE : 1 | 2 | 3 | 4 | 5 | 6 | DIE |

Key:

Paddles (4) 60° reversing

Single lead screw

Feed screw

0294226

FIG. 5e

ZONE : 1 | 2 | 3 | 4 | 5 | 6 | DIE

90

60R

60R

10 x 3.5mm holes

FIG. 5f

ZONE : 1 | 2 | 3 | 4 | 5 | 6 | DIE

90

90

60R

10 x 3.5mm holes

Key:

60R    Paddles (4) 60° reversing

Single lead screw

Feed screw